Europäisches Patentamt

European Patent Office

Office européen des brevets

(19)

(11) Veröffentlichungsnummer : **0 137 250**
**B1**

(12) **EUROPÄISCHE PATENTSCHRIFT**

(45) Veröffentlichungstag der Patentschrift :
17.05.89

(21) Anmeldenummer : 84109976.5

(22) Anmeldetag : 22.08.84

(51) Int. Cl.⁴ : **B 29 C 45/22**

(54) **Mehrstoffdüse zum Zusammenführen mindestens zweier fliessfähiger, Kunststoff, insbesondere Schaumstoff bildender Reaktionskomponenten zum Zwecke des Einleitens der Reaktion durch Vermischung und Verfahren zum Betrieb dieser Mehrstoffdüse.**

(30) Priorität : 03.09.83 DE 3331840
01.10.83 DE 3335786
01.10.83 DE 3335787
01.06.84 DE 3420517

(43) Veröffentlichungstag der Anmeldung :
17.04.85 Patentblatt 85/16

(45) Bekanntmachung des Hinweises auf die Patenterteilung : 17.05.89 Patentblatt 89/20

(84) Benannte Vertragsstaaten :
AT BE CH DE FR GB IT LI NL

(56) Entgegenhaltungen :
EP-A- 0 037 523
EP-A- 0 125 787
DE-A- 2 031 739
DE-A- 2 252 008
DE-A- 2 444 308
DE-B- 1 086 598
DE-B- 1 251 190
FR-A- 1 496 800
FR-A- 2 264 652
GB-A- 772 344
US-A- 3 207 486
US-A- 3 717 306

(73) Patentinhaber : MASCHINENFABRIK HENNECKE GMBH
Postfach 1180
D-5205 St. Augustin 1 (DE)

(72) Erfinder : Proksa, Ferdinand, Dr.
Am Arenzberg 9
D-5090 Leverkusen 3 (DE)
Erfinder : Sulzbach, Hans-Michael, Dipl.-Ing.
Hermann-Löns-Strasse 12
D-5330 Konigswinter 51 (DE)
Erfinder : Raffel, Reiner, Dipl.-Ing.
Müschbungert 2
D-5200 Siegburg (DE)
Erfinder : Althausen, Ferdinand
Niederwennerscheid 48
D-5206 Neunkirchen 1 (DE)

(74) Vertreter : Müller, Heinz-Gerd, Dipl.-Ing. et al
BAYER AG Konzernverwaltung RP Patentabteilung
D-5090 Leverkusen 1, Bayerwerk (DE)

EP 0 137 250 B1

Beschreibung

Die Erfindung richtet sich auf eine Mehrstoffdüse zum Zusammenführen mindestens zweier fließfähiger, Kunststoff, insbesondere Schaumstoff bildender Reaktionskomponenten zum Zwecke des Einleitens der Reaktion durch Vermischung, bestehend aus einem Gehäuse ; in das Gehäuse führenden Komponentenzuleitungen ; einer im Gehäuse angeordneten Gehäusebohrung mit koaxialem Auslaßkanal in ihrer Stirnfläche ; mindestens einer in der Gehäusebohrung koaxial geführten Nadelhülse ; einer in der Nadelhülse koaxial geführten Düsennadel ; einer zwischen der Wandung der Gehäusebohrung und der Nadelhülse sowie einer zwischen Nadelhülse und Düsennadel angeordneten Kammer, in welche je eine der Komponentenzuleitungen einmündet, wobei während des Schließzustandes die Düssennadel mit der inneren Stirnfläche der Nadelhülse und die äußere Stirnfläche der Nadelhülse mit der inneren Stirnfläche der Gehäusebohrung Dichtsitze bilden, wohingegen während des Öffnungszustandes die Düsennadel eine koaxiale Düsenöffnung der Nadelhülse freigibt und zwischen der äußeren Stirnfläche der Nadelhülse und der inneren Stirnfläche der Gehäusebohrung eine Düsenöffnung gebildet ist (DE-AS 12 51 190), Außerdem betrifft die Erfindung auch ein Verfahren zum Betrieb dieser Mehrstoffdüse.

Mehrstoffdüsen, in Spritzpistolen angeordnet, haben sich in der Lackspritztechnik für sogenannte Zweikomponentenlacke gut bewährt. Auf exakt dosiertes Zusammenführen der Komponenten auch bei Beginn und Ende des Mischvorganges braucht hierbei kein besonderer Wert gelegt zu werden.

Es lag nahe, derartige Mehrstoffdüsen auch für die Herstellung von massiven oder porösen Kunststoffen einzusetzen. Für einfache Anwendungsgebiete, wie beispielsweise die Polyurethan-Isolierschaumstoff-Technik, reichen die bekannten Mehrstoffdüsen auch aus. Für die Fertigung hochwertiger Kunststoffteile, insbesondere durch Formverschäumung, sind der Verwendung von bekannten Mehrstoffdüsen aus den verschiedensten Gründen schon bald Grenzen gesetzt.

Aus der DE-PS 1 251 190 ist eine Zweikomponenten-Spritzpistole, insbesondere zum Verspritzen von Epoxiharzen, bekannt, bei welcher zwei koaxiale Flüssigkeitsdüsen in eine sich erweiternde und dann wieder konisch verengende Mischkammer münden, wobei an der die koaxialen Düsenöffnungen aufweisenden Stirnseite ein Vorsatzstück mit einer Mischkammer angeordnet ist, in welcher ein gegen die Düsenöffnungen weisender Kegel vorgesehen ist. Schließlich sind noch Druckluftdüsen innerhalb und außerhalb angeordnet, mit welchen Luft direkt in das Gemisch eingeblasen wird bzw. der austretende Gemischstrahl beeinflußt wird. Ein dosiertes Zusammentreffen der Komponenten zu Beginn und auch zu Ende des Spritzvorganges ist nicht gewährleistet, weil die Betätigung mit Handhebel erfolgt und damit nicht schnell genug ist. Diese kompliziert gestaltete Mischkammer läßt sich nur mit Spülmittel reinigen.

Ähnliche Nachteile weist die Zweikomponenten-Spritzpistole für Polyesterharzlacke gemäß der DE-AS 1 086 598 auf. Hier sind die erste und die zweite Düse feststehend hintereinander angeordnet und mittels einer gemeinsamen Düsennadel verschließbar, wobei auch noch eine koaxiale Luftdüse vorgesehen ist. Bei einer ersten Ausführungsform dieser Pistole besteht der Nachteil, daß unmittelbar beim Öffnen der Düse eine Komponente voreilt und beim Schließen nacheilt, so daß Komponentenanteile unvermischt bleiben. Bei der zweiten Ausführungsform besteht neben diesen Nachteilen auch noch die Notwendigkeit der Reinigung mittels Spülmittel.

Bei der gemäß der DE-OS 2 252 008 offenbarten Technik zum Zusammenführen von Komponenten, wie Polyol und Isocyanat, sind ebenfalls koaxiale Düsen vorgesehen, welche in eine Mischkammer münden, wobei diese Mischkammer entsprechend dem Druck einer Hauptkomponente durch einen federgelagerten Einsatz vergrößert oder verkleinert wird und wobei die Düsenöffnungen durch die gegen Druckfedern wirkenden Komponentendrücke öffnen und schließen. Diese Steuerungsweise genügt wegen der Ungenauigkeit der Öffnungs- und Schließzeitpunkte den heutigen Ansprüchen nicht mehr. Mittels des Einsatzes ist im Schließzustand die Mischkammer völlig verdrängt. Dabei kann aber zwischen zwei radialen Flächen ein Gemischfilm verbleiben, welcher ausreagiert, so daß die Mischkammer mit der Zeit zuwächst. Die Hauptkomponente gelangt durch den Steuerspalt in die Mischkammer. Bei dem vorliegenden Konzept kann für diese Hauptkomponente nur sehr geringe Verdüsungsgeschwindigkeit eingestellt werden. Das ist bedingt durch den relativ großen Durchmesser und die zulässige Steuerspaltbreite, die so gewählt werden muß, daß keine Partikel in diesem Steuerspalt abgesiebt werden, was zu Funktionsstörungen führen könnte.

Schließlich sind aus der DE-AS 2 031 739 (entsprechend US-PS 3 771 963) ein Verfahren und eine Vorrichtung zum Herstellen von Schaum- oder Homogenstoffen aus mindestens zwei miteinander reagierenden Komponenten bekannt, wobei die Komponenten getrennt an die Mischzone herangeführt und unmittelbar vor dem Eindüsen in die Mischzone zusammengeführt und gemeinsam unter Überdruck verdüst werden und in der Mischzone während einer Verweilzeit von mindestens 1/1000 sec. miteinander vermischt werden und das Gemisch anschließend ausgetragen wird. Bei der zugehörigen Vorrichtung sind die Zuführkanäle unmittelbar vor der Düsenmündung zusammengeführt und enden in einer gemeinsamen Mehrstoffdüse, welche in eine Mischkammer weist. Diese Vorrichtung besitzt ebenfalls eine gegen Druckfedern arbeitende Drucksteuerung für die Komponenten mit den bekannten Ungenauigkeiten. Außerdem wird eine Komponente zentral durch die Düsennadel zugeführt und ist erst stromaufwärts durch ein federbelastetes Druckventil absperrbar. Ein Nachtropfen ist unvermeidlich und hat Verschmutzung sowie Nacheilen dieser Komponente zur Folge. · Ein weiterer Nachteil ist darin zu sehen, daß diese Mehrstoffdüse zum Einsatz für die RIM-Technik nicht geeignet ist, weil bei dieser Anwendung die zentrale Zuführbohrung zuwachsen würde.

Allen diesen vorbekannten mehrstoffdüsenartigen Vorrichtungen haften also folgende Nachteile an : Sie müssen mit Spülmittel gereinigt werden ; arbeiten zu Beginn und Ende des Zusammenflusses der Komponenten zu ungenau ; demzufolge lassen sich kleine Gemischmengen nicht reproduzierbar herstellen.

Es besteht die Aufgabe, eine Mehrstoffdüse und ein Verfahren zum Betrieb derselben zu finden, womit der Zusammenfluß und die Vermischung der Komponenten in dosiertem Verhältnis auch zu Beginn und Ende exakt stattfindet, also kein Voreilen bzw. Nacheilen einer Komponente auftritt ; ein spülmittelfreies Arbeiten und auch das Zusammenführen kleinster Komponentenmengen zum Zwecke des Einleitens der Reaktion durch Vermischung reproduzierbar möglich ist.

Gelöst wird diese Aufgabe durch eine Mehrstoffdüse der eingangs genannten Art, welche dadurch gekennzeichnet ist, daß die Düsennadel mit einem koaxialen Zapfen versehen ist, dessen Querschnittsform und -größe derjenigen der Düsenöffnung der Nadelhülse und derjenigen des Auslaßkanals angepaßt ist und welcher im Schließzustand den Auslaßkanal bis zum Auslaß ausfüllt ; und daß sowohl der Düsennadel als auch der Nadelhülse an ihrem anderen Ende eine Zwangssteuerung zugeordnet ist.

Durch die Anordnung des Zapfens an der Spitze der Düsennadel und die angegebene Gestaltung dieses Zapfens ist es erstmals gelungen, eine Mehrstoffdüse selbstreinigend auszubilden. Die Zwangssteuerung der Düsennadel und der Nadelhülse gestattet es, das Freigeben und Schließen der Düsenöffnung derart exakt aufeinander abzustimmen, daß die Reaktionskomponenten vom ersten bis zum letzten Tropfen im genauen Dosierverhältnis zusammengeführt werden, ohne daß eine der Komponenten vor- oder nacheilt.

Da einerseits der Auslaßkanal der Mehrstoffdüse, welcher im Schließzustand von dem Zapfen ausgefüllt ist, sehr gering bemessen sein kann, und andererseits sämtliche Komponenten durch diesen gemeinsamen Auslaßkanal strömen, gelingt es, besonders geringe Komponentenmengen pro Zeiteinheit zu verdüsen, so daß auch kleinste Formteile von wenigen Gramm Gewicht herstellbar sind.

Damit eröffnet diese neue Technik neue Anwendungsgebiete für die Herstellung von Formteilen aus Kunststoffen, insbesondere Polyurethan-Schaumstoffen.

Vorzugsweise haben die Düsenöffnungen der Nadelhülse und der anschließende Auslaßkanal gleichen Durchmesser, welchem derjenige des Zapfens mit entsprechender Toleranz angepaßt ist. Die Düsenöffnung kann aber auch größeren Durchmesser als der Auslaßkanal aufweisen, wobei der Zapfen entsprechend abgesetzt sein muß.

Gemäß einer besonderen Ausführungsform weist die Mehrstoffdüse mehrere konzentrische Nadelhülsen auf.

Dadurch ist die Möglichkeit gegeben, mehr als zwei Komponenten oder eine oder mehrere Komponenten gleichzeitig durch verschiedene Düsenöffnungen zusammenzuführen, wodurch sich zwischen den einzelnen Strahlen jeweils Grenzschichten bilden, so daß mehrere Berührungszonen entstehen.

Vorzugsweise sind der (den) Nadelhülse(n) und der Düsennadel unabhängig voneinander einstellbare Hubverstellanschläge zugeordnet. Auf diese Weise lassen sich die Verdüsungsdrücke und damit die Strahlgeschwindigkeiten besonders leicht aufeinander abstimmen. Die Verstellbarkeit der Hubverstellanschläge kann mit mechanischen, hydraulischen oder pneumatischen Mitteln, insbesondere auch während des Vermischungsvorganges, verwirklicht werden. Vorzugsweise sind sie fernverstellbar, z. B. von einem Steuerpult aus. Nach einer besonderen Ausführungsform erfolgt die Verstellung automatisch, z. B. in Abhängigkeit vom jeweils gewünschten Komponentendruck. Auch ein entsprechendes Programm läßt vorgeben.

Nach einer besonderen Ausführungsform besteht die Zwangssteuerung aus hydraulischen Antrieben.

Diese Ausführungsform aus Kolben und Zylindern ermöglicht extrem schnelles Umschalten auf Öffnen oder Schließen der Düsenöffnungen, so daß ein Voreilen oder Nacheilen einer Komponente ausgeschlossen ist.

Als Hydraulikflüssigkeit können hierbei durchaus auch die Komponenten selbst verwendet werden. In diesem Falle werden die Düsennadel und die Nadelhülse durch den Druck der Reaktionskomponenten geöffnet ; geschlossen werden sie aber mittels einer üblichen Hydraulikflüssigkeit. Auch in diesem Fall wird gegen Anschläge gearbeitet, so daß es sich um eine Zwangssteuerung handelt.

Die Komponentendrücke und die Schaltgeschwindigkeiten lassen sich derart aufeinander abstimmen, daß beim Öffnen der Düsenöffnungen die Komponenten vom ersten Moment an exakt zusammentreffen und auch beim Schließen die Unterbrechung so exakt erfolgt, daß keinerlei Rest einer der Komponenten allein bleibt.

Nach einer weiteren Ausführungsform sind der Mehrstoffdüse Komponentenrücklaufleitungen und Absperrorgane zugeordnet, wobei die Absperrorgane aus hydraulischen Antrieben bestehen und mit den hydraulischen Antrieben von Düsennadel und Nadelhülse(n) gekoppelt sind.

Dadurch läßt sich die bei Polyurethan-Schäummaschinen allgemein bekannte Technik, die Komponenten während der Pausenzeiten zirkulieren zu lassen, auch auf die neue Mehrstoffdüse anwenden.

In vorteilhafter Weise besitzen die Schieber der Absperrorgane Zapfen, um beim Umschalten von Kreislauf auf Verdüsen und umgekehrt keine gespaltene Förderung zu erhalten. Diese Absperrorgane lassen sich gleichzeitig auch als Drosselorgane verwenden, um den Kreislaufdruck einzustellen.

Alternativ sind Düsennadel und Nadelhülse(n) als Umschaltorgane ausgebildet, indem sie Ansätze, Nuten oder Kanäle aufweisen, welche nur im Schließzustand der Düsenöffnungen den Weg zu den Rücklaufleitungen freigeben.

Wenn die Düsenöffnungen für die konzentrisch zuzuführenden Komponenten eine deutlich seitliche Richtungskomponente aufweisen, etwa zwischen 30° bis 150°, vorzugsweise zwischen 45° bis 135°, dichten diese Düsenöffnungen im Schließzustand sicherer ab.

Bei Zufuhr von mehr als zwei Komponenten wird der fertigungstechnische Aufwand zur Herstellung einer entsprechenden Zahl konzentrischer Nadelhülsen wegen der erforderlichen engen Toleranzen enorm, wobei auch noch erhöhte Leckageanfälligkeit besteht.

Deshalb wird vorzugsweise vorgeschlagen, daß eine Zuleitung für eine Zusatzkomponente vorgesehen ist, deren Mündung in die Führungsbohrung der Düsennadel weist, und die Düsennadel mit einem Absatz versehen ist, welcher als Steuerkante dient, indem in Öffnungsstellung der Düsennadel die Mündung von dem Absatz freigegeben ist und in Schließstellung vom dickeren Schaftabschnitt abgedichtet ist.

Diese Ausführungsform der Mehrstoffdüse bringt also den Vorteil, daß sie weniger bewegbare Teile aufweist und damit weniger Dichtflächen, also weniger störanfällig und einfacher herstellbar ist. Der Zufluß der Zusatzkomponente wird durch den Absatz der Düsennadel freigegeben oder unterbrochen. Es versteht sich, daß Zuleitungen für mehrere Zusatzkomponenten in der gleichen Weise angeordnet sein können. Ihre Mündungen werden dann vorzugsweise in gleichen Winkelabständen voneinander vorgesehen. Auch ist es möglich, einer Zuleitung mehrere Mündungen zuzuordnen.

Man wird von den Hauptkomponenten jene über die in einer Nadelhülse befindliche Kammer führen, welche mit der Zusatzkomponente nicht reagiert, weil nach jedem Arbeitstakt in dieser Kammer ein Gemisch aus der Hauptkomponente und der Zusatzkomponente verbleibt.

Für den Fall, daß mehrere miteinander reaktive Zusatzkomponenten oder Zusatzkomponenten, die teils mit der einen, teils mit der anderen Hauptkomponente reagieren, zugeführt werden müssen, ist es auch möglich, die Mündung einer Zuleitung im Bereich des Dichtsitzes der Nadelhülse mit der Gehäusebohrung anzuordnen. Es versteht sich, daß auch hier mehrere Mündungen für eine Zuleitung vorgesehen sein können, bzw. daß Mündungen und Zuleitungen für mehrere Zusatzkomponenten anzuordnen sind.

In diesem Fall erfolgt die Zusammenführung jener derart zugeführten Zusatzkomponenten mit den anderen Komponenten erst unmittelbar vor dem Austritt aus der Mehrstoffdüse.

Eine weitere besondere Ausführungsform ist gekennzeichnet durch die Kombination der Mehrstoffdüse mit einem Formwerkzeug mittels Anfahrführungen und korrespondierender Koppelemente.

Diese Ausführungsform hat den Vorteil, eine ansonsten stationär angeordnete Mehrstoffdüse an beispielsweise auf einem Drehtisch taktweise vorbeiwandernde Formwerkzeuge anfahren zu können. Dabei lassen sich vorteilhaft an sich bekannte Sicherheitsvorrichtungen vorsehen, welche den Mischvorgang erst auslösen, wenn das Formwerkzeug geschlossen und die Mehrstoffdüse abdichtend angefahren ist. Als Anfahrführungen dienen beispielsweise Schlittenführungen. Der Anfahrvorgang selbst läßt sich beispielsweise mittels eines zugeordneten hydraulischen Antriebs durchführen.

Vorzugsweise ist bei dieser Ausführungsform in der Wandung des Formwerkzeuges eine dem Formhohlraum vorgeordnete Beruhigungskammer vorgesehen, deren Einlaßöffnung in Koppelstellung der Mehrstoffdüse mit deren Auslaßöffnung übereinstimmt und mittels eines in der Wandung des Formwerkzeuges integrierten Verschlußschiebers verschließbar ist.

Auf diese Weise läßt sich die Auslaßöffnung der Mehrstoffdüse beim Ankoppeln an das Formwerkzeug abdichten. Der Verschlußschieber läßt sich als Auf/Zu-Schieber ausbilden. Er kann aber auch unter dem sich aufbauenden Druck des Gemisches gegen eine Vorspannung öffnen und läßt sich auch als Auswerfer für den in der Beruhigungskammer ausreagierten Gemischrest ausbilden. Dieser Verschlußschieber ist beispielsweise so ausgestaltet, daß ihm die Beruhigungskammer als Führung dient. Sein Hub ist vorzugsweise durch einen verstellbaren Anschlag einjustierbar. Die Achse des Verschlußschiebers fluchtet vorzugsweise mit der Achse der Mehrstoffdüse, kann aber auch jede andere Richtung aufweisen. Insbesondere können beide Achsen auch unter einem rechten Winkel zueinander angeordnet sein. Der Verschlußschieber läßt sich bequem hydraulisch oder mechanisch betätigen. Es versteht sich, daß er vorzugsweise automatisch steuerbar ist.

Das neue Verfahren zum Zusammenführen mindestens zweier fließfähiger, Kunststoff, insbesondere Schaumstoff bildender Reaktionskomponenten zum Zwecke des Einleitens der Reaktion durch Vermischung, gemäß welchem die Reaktionskomponenten dosiert zugeführt und eine der Reaktionskomponenten zentral und die andere(n) jene konzentrisch umhüllend zusammengeführt werden, und beim Zusammenführen eine Relativgeschwindigkeit zwischen dem zentralen und dem(n) konzentrischen Strahl(en) eingehalten wird, ist dadurch gekennzeichnet, daß eine so hohe Relativgeschwindigkeit erzeugt wird, daß in der Grenzschicht zwischen den Strahlen Turbulenz entsteht.

Diese Maßnahme bringt die besten Voraussetzungen für das Einleiten einer guten Vermischung.

Vorzugsweise wird eine so hohe Relativgeschwindigkeit erzeugt, daß in der Grenzschicht zwischen den Strahlen Turbulenz entsteht.

Diese Turbulenz sorgt für den guten Austausch der Teilchen zwischen den beiden Strahlen. Bei Reaktionskomponenten, welche aufgrund ihrer Konstitution schwer vermischbar sind, kann es erforderlich sein, eine Mischkammer nachzuordnen. Häufig genügt auch schon der Aufprall des Gemischstrahles auf eine Gegenfläche.

Nach einer besonderen Durchführungsform des Verfahrens werden bei mehr als zwei Strahlen die weiteren Strahlen jeweils zu einem beliebigen Zeitpunkt zugeführt bzw. unterbrochen.

Dadurch gelingt es, während des Mischvorganges das Dosierverhältnis zu ändern oder durch Zugabe oder Wegnahme weiterer Komponenten somit die Voraussetzungen für besondere Eigenschaften des Fertigproduktes zu schaffen. Dies setzt natürlich voraus, daß für diesen Fall die entsprechenden Nadelhülsen separat zwangssteuerbar sind.

In der Zeichnung ist die neue Mehrstoffdüse in mehreren Ausführungsbeispielen rein schematisch im Längsschnitt dargestellt und nachstehend näher erläutert. Es zeigen :

Fig. 1 die Mehrstoffdüse gemäß einer ersten Ausführungsform in Kombination mit einem Formwerkzeug in Schließstellung ;

Fig. 2 die Mehrstoffdüse gemäß Fig. 1 in Öffnungsstellung ;

Fig. 3 die Mehrstoffdüse gemäß einer zweiten Ausführungsform in Öffnungsstellung und

Fig. 4 die Mehrstoffdüse gemäß Fig. 3 in Schließstellung.

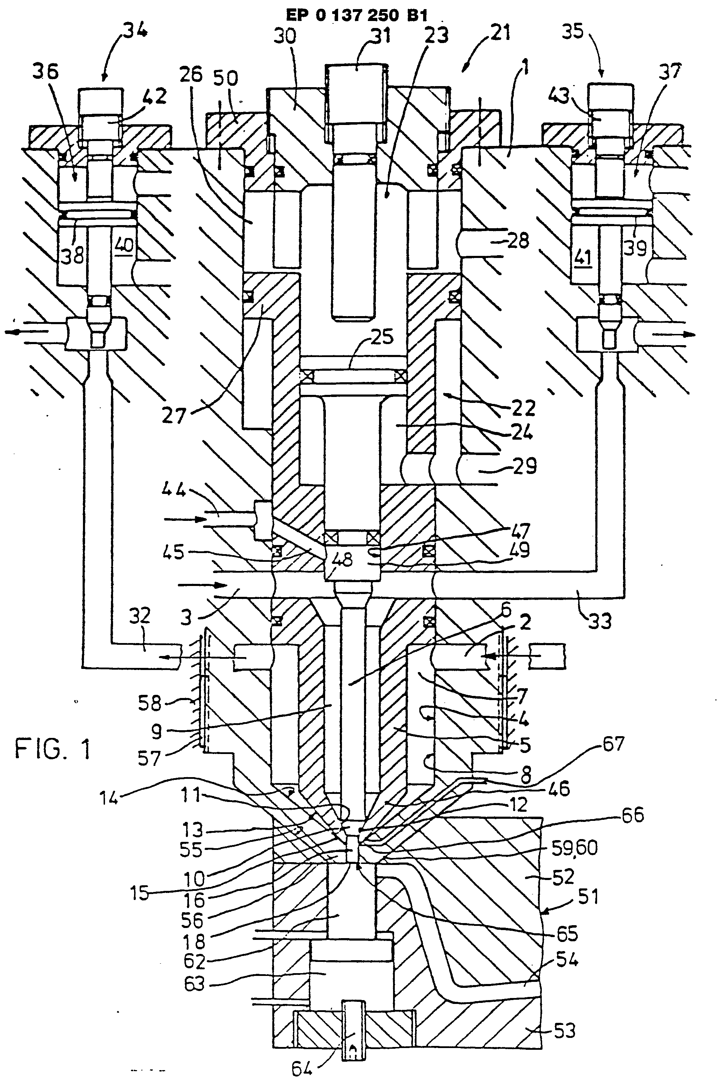

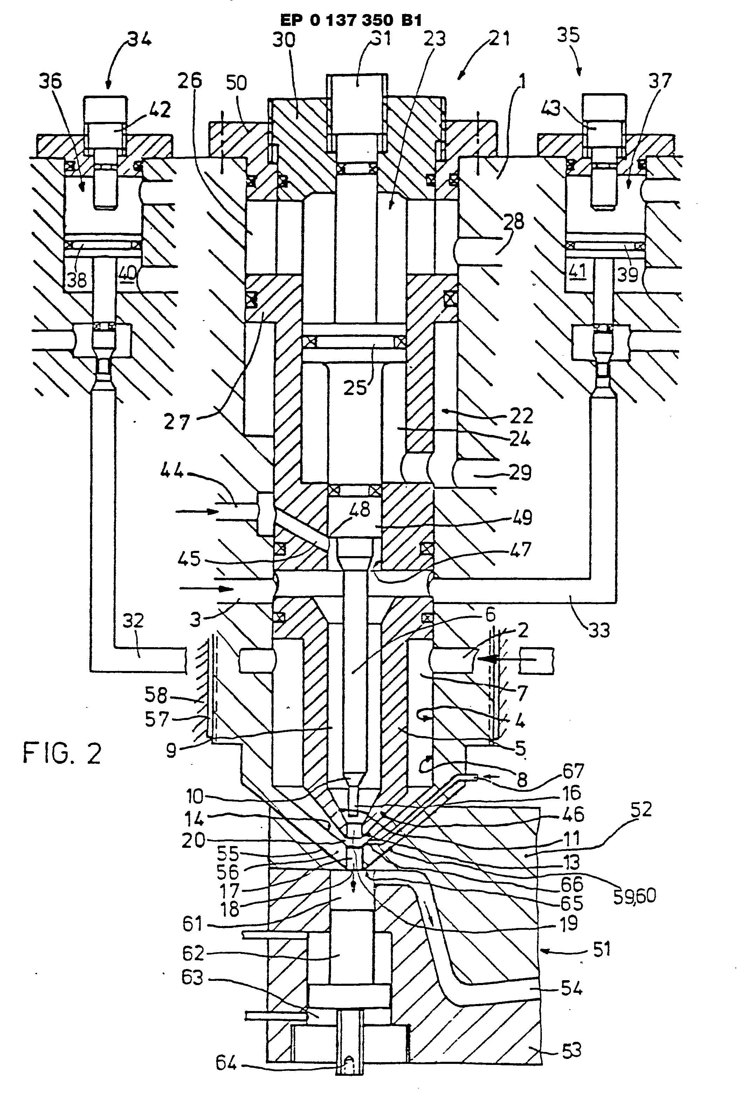

In Fig. 1, 2 besteht die Mehrstoffdüse aus einem Düsengehäuse 1, in welches Zuleitungen 2, 3 für zwei Hauptkomponenten (Isocyanat und Polyol) sowie eine Zuleitung 44 mit Mündung 45 für eine Zusatzkomponente (z. B. Treibmittel) hineinführen. Innerhalb des Gehäuses 1 ist eine Gehäusebohrung 4 angeordnet, in welcher eine mit einem Boden 46 versehene Nadelhülse 5 geführt ist, welche konzentrisch eine in ihr bzw. in einer darin angeordneten axialen Bohrung 47 geführte Düsennadel 6 umgibt. Die Komponentenzuleitung 2 mündet in eine Kammer 7, welche zwischen der Innenwand 8 der Gehäusebohrung 4 und der Nadelhülse 5 gebildet ist. Die Komponentenzuleitung 3 mündet in eine innerhalb der Nadelhülse 5 angeordnete, von der Düsennadel 6 durchzogene Kammer 9. Diese Düsennadel 6 besitzt einen Absatz 48, welcher als Steuerkante wirkt. Bei angehobener Düsennadel 6 öffnet die Zuleitung 44 frei in die Kammer 9 ; in Schließstellung dichtet der dickere Schaftabschnitt 49 die Mündung 45 der Zuleitung 44 ab. Außerdem besitzt die Düsennadel 6 noch eine konische Dichtfläche 10, welche im Schließzustand (Fig. 1) mit der inneren Stirnfläche 11 der Nadelhülse 5 einen Dichtsitz 12 bildet, während auch die äußere Stirnfläche 13 der Nadelhülse 5 und die innere Stirnfläche 14 der Gehäusebohrung 4 einen Dichtsitz 15 bilden. In dieser Stellung der Düsennadel 6 füllt ein an ihrer Spitze angeordneter Zapfen 16 einen Ausströmkanal 17 völlig aus, d. h. er reicht bis zum Auslaß 18. Während des Öffnungszustandes (Fig. 2) gibt die Düsennadel 6 bzw. ihr Zapfen 16 eine Düsenöffnung 19 frei, und zwischen äußerer Stirnfläche 12 der Nadelhülse 5 und innerer Stirnfläche 13 der Gehäusebohrung 4 ist eine ringförmige Düsenöffnung 20 gebildet. Der Nadelhülse 5 und der Düsennadel 6 ist eine Zwangssteuerung 21 zugeordnet. Diese besteht aus hydraulischen Antrieben 22, 23, welche aus einem in der Nadelhülse 5 angeordneten Zylinderraum 24 und einem an der Düsennadel 6 angeordneten Kolben 25 bzw. einem eine Erweiterung der Gehäusebohrung 4 darstellenden Zylinderraum 26 mit einem an der Nadelhülse 5 angeordneten Kolben 27 sowie Zu- und Abläufen 28, 29 gebildet sind. Auf die Kolben 25, 27 wirken nicht dargestellte, relativ schwache Federn ein, welche die Düsennadel 6 und die Nadelhülse 5 bei nicht anstehendem Hydraulikdruck im Schließzustand halten. Sowohl der Nadelhülse 5 als auch der Düsennadel 6 sind Hubverstellanschläge 30, 31 zugeordnet, welche in einem die Gehäusebohrung 4 bzw. den hydraulischen Zylinderraum 26 verschließenden Einsatzkörper 50 einstellbar gelagert sind. Von den Kammern 7, 9 führen Rücklaufleitungen 32, 33 ab, welche durch im Gehäuse 1 angeordnete Ventile 34, 35 absperrbar sind. Diese sind ebenfalls mit hydraulischen Antrieben 36, 37, bestehend aus Kolben 38 bzw. 39 und Zylindern 40 bzw. 41, aufgebaut. Mittels Hubverstellanschlägen 42, 43 lassen sich die Durchströmquerschnitte einstellen. Die Rücklaufleitung und das Absperrventil für die Zusatzkomponente sind nicht dargestellt.

Die Mehrstoffdüse ist mit einem Formwerkzeug 51 kombiniert. Dieses besteht aus zwei Formhälften 52, 53 und schließt einen Formhohlraum 54 ein. Die der Mehrstoffdüse zugewandte Formhälfte 52 weist eine Zentrierausnehmung 55 auf, welche mit einem Zentrieransatz 56 der Mehrstoffdüse zusammenpaßt. Das Formwerkzeug 51 ist fixiert, während die Mehrstoffdüse in rein schematisch angedeuteten Anfahrführungen 57, 58 zu dem Formwerkzeug 51 hin bewegbar ist. Zentrieransatz 56 und Zentrierausnehmung 55 weisen im Schließzustand abdichtende Paßflächen 59, 60 auf. In der anderen Formhälfte 53 ist axial zur Zentrierausnehmung 55 eine Beruhigungskammer 61 vorgesehen. Sie dient gleichzeitig als Führung für einen Verschlußschieber 62, welchem ein hydraulischer Antrieb 63 sowie ein verstellbarer Anschlag 64 zugeordnet sind. Diese Ausführungsform des Verschlußschiebers 62 hat also lediglich Auf/Zu-Funktion, ist aber darüber hinaus auch als Auswerfer für den in der Beruhigungskammer 61 aushärtenden Gemischrest verwendbar. Die Beruhigungskammer 61 ist in der nicht dargestellten abgefahrenen Stellung der Mehrstoffdüse bis frühestens nach dem Anfahren an das Formwerkzeug 51 von dem Verschlußschieber 62 völlig ausgefüllt und dichtet in angefahrener Stellung die Auslaßöffnung 18 der Mehrstoffdüse ab, bis der Verdüsungsvorgang einsetzt. In der angefahrenen Stellung der Mehrstoffdüse grenzen die Auslaßöffnung 18 und die Einlaßöffnung 65 der Beruhigungskammer 61 unmittelbar aneinander. Sie liegen in der gleichen Achse. Die Mündung 66 einer Zuleitung 67 für eine weitere Zusatzkomponente (z. B. Farbstoff) öffnet im Bereich des Dichtsitzes 15 der Nadelhülse 5 mit der Gehäusebohrung 4.

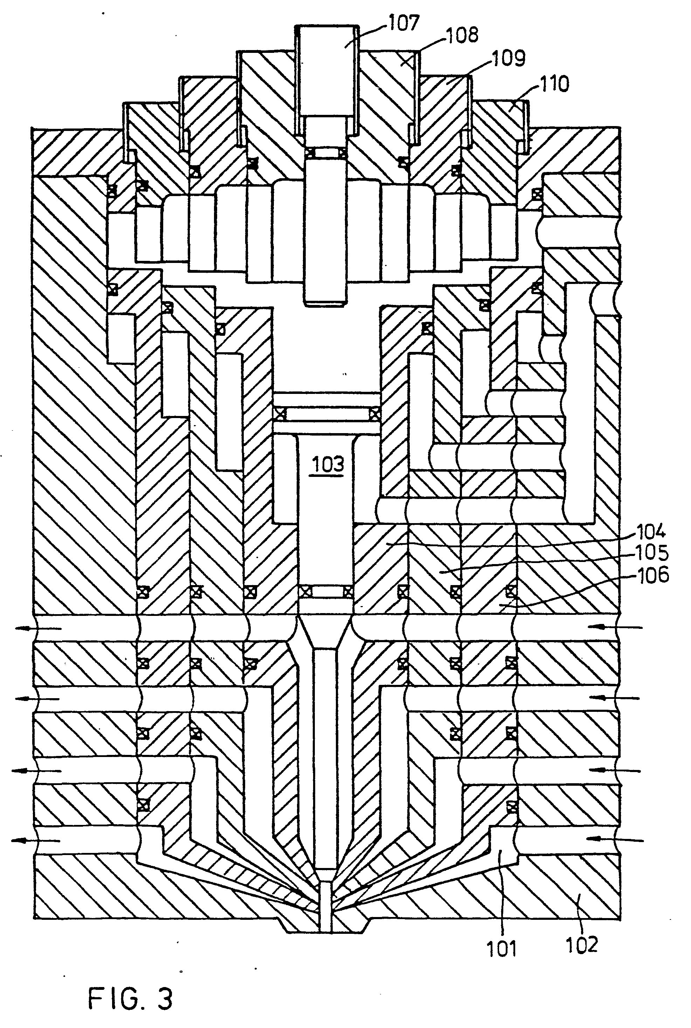

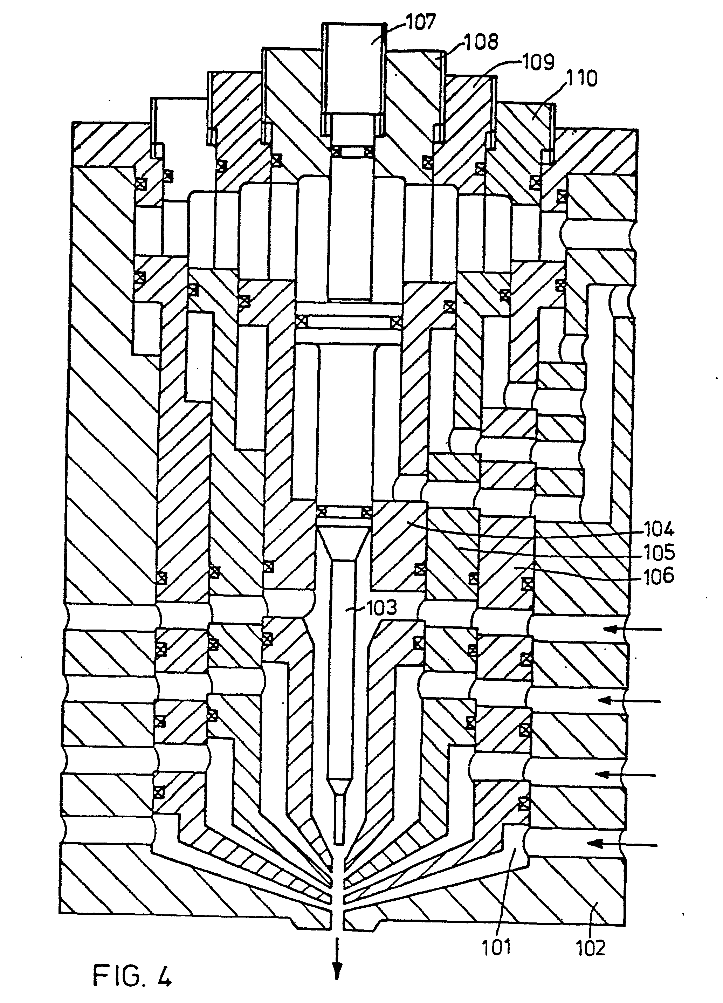

Die Mehrstoffdüse gemäß Fig. 3, 4 unterscheidet sich dem Prinzip nach von derjenigen gemäß Fig. 1, 2 dadurch, daß in der Gehäusebohrung 101 des Gehäuses 102 die Düsennadel 103 neben der Nadelhülse 104 noch von zwei weiteren ineinander konzentrisch geführten Nadelhülsen 105, 106 umgeben ist. Der Düsennadel 103 sowie den Nadelhülsen 104, 105, 106 sind jeweils separate, verstellbare Anschläge 107, 108, 109, 110 zugeordnet. Nach Kenntnisnahme der Beschreibung der in Fig. 1, 2 dargestellten Mehrstoffdüse bedarf es für den Fachmann keiner weiteren Erläuterungen über den Aufbau und die Wirkungsweise der Ausführungsform gemäß Fig. 3, 4.

Verfahrensbeispiel

Verwendet wird die Mehrstoffdüse gemäß Fig. 1, 2, jedoch ohne Kombination mit einem Formwerkzeug. Der besseren Übersichtlichkeit halber wird durch Absperren der Zuleitung 44 auf die Zufuhr einer Zusatzkomponente verzichtet.

Von Vorratsbehältern werden die Komponenten Polyol und Isocyanat mittels Hochdruckdosierpumpen im Verhältnis 2 : 1 über Zuleitungen 2, 3 zur Mehrstoffdüse gefördert und gelangen bei geschlossener Mehrstoffdüse zunächst dank der geöffneten Absperrorgane 34, 35 über die Rücklaufleitungen 32, 33 wieder zurück in die Vorratsbehälter. Die Absperrorgane 34, 35 sind so eingestellt, daß durch Androsselung sich Kreislaufdrücke von 200 bar für die Polyol-Komponente und 40 bar für die Isocyanat-Komponente einstellen. Zur Herstellung eines Formteils wird eine Gemischmenge von 20 g benötigt. Die Dosierpumpen fördern 30 g/sec Polyol und 15 g/sec Isocyanat, so daß die Zwangssteuerung 21 auf eine Verdüsungszeit von 0,44 sec einzustellen ist. Nun wird die Zwangssteuerung 21 betätigt, so daß die Kolben 25, 27 derart beaufschlagt werden, daß Nadelhülse 5 und Düsennadel 6 schlagartig angehoben und die Düsenöffnungen 19, 20 freigegeben werden. Die Düsenöffnung 20 ist offen, wenn die Nadelhülse 5 gegen den Anschlag 30 schlägt. Die Düsenöffnung 19 ist offen, wenn die Düsennadel 6 gegen den Anschlag 31 schlägt. Unter Berücksichtigung der konstruktiven Abmessungen und der unterschiedlichen Viskositäten der Komponenten läßt sich durch entsprechende Wahl der Injektionsdrücke erreichen, daß beide Komponenten nach dem Öffnen der Düsenöffnungen 19, 20 bereits mit den ersten Tropfen exakt im Dosierverhältnis im Auslaßkanal 17 aufeinandertreffen. Beim Schließen macht sich dieser Effekt in gleicher vorteilhafter Weise bemerkbar. Die Verdüsung des Polyols bzw. des Isocyanats erfolgt mit Geschwindigkeiten von 120 m/sec bzw. 30 m/sec unmittelbar beim Austritt, so daß zwischen dem zentralen Polyol-Strahl und dem konzentrischen Isocyanat-Strahl eine Relativgeschwindigkeit von 90 m/sec herrscht. Dadurch wird in der Grenzschicht zwischen den beiden Strahlen Turbulenz erzeugt.

**Patentansprüche**

1. Mehrstoffdüse zum Zusammenführen mindestens zweier fließfähiger, Kunststoff, insbesondere Schaumstoff bildender Reaktionskomponenten zum Zwecke des Einleitens der Reaktion durch Vermischung, bestehend aus einem Gehäuse (1) ; in das Gehäuse (1) führenden Komponentenzuleitungen (2, 3) ; einer im Gehäuse (1) angeordneten Gehäusebohrung (4) mit koaxialem Auslaßkanal (17) in ihrer Stirnfläche (14) ; mindestens einer in der Gehäusebohrung (4) koaxial geführten Nadelhülse (5) ; einer in der Nadelhülse (5) koaxial geführten Düsennadel (6) ; einer zwischen der Wandung (8) der Gehäusebohrung (4) und der Nadelhülse (5) sowie einer zwischen Nadelhülse (5) und Düsennadel (6) angeordneten Kammer (7, 9), in welche je eine der Komponentenzuleitungen (2, 3) einmündet, wobei während des Schließzustandes die Düsennadel (6) mit der inneren Stirnfläche (11) der Nadelhülse (5) und die äußere Stirnfläche (13) der Nadelhülse (5) mit der inneren Stirnfläche (14) der Gehäusebohrung (4) Dichtsitze (12, 15) bilden, wohingegen während des Öffnungszustandes die Düsennadel (6) eine koaxiale Düsenöffnung (19) der Nadelhülse (5) freigibt, und zwischen der äußeren Stirnfläche (13) der Nadelhülse (5) und der inneren Stirnfläche (14) der Gehäusebohrung (4) eine Düsenöffnung (20) gebildet ist, dadurch gekennzeichnet, daß die Düsennadel (6) mit einem koaxialen Zapfen (16) versehen ist, dessen Querschnittsform und -größe derjenigen der Düsenöffnung (19) der Nadelhülse (5) und derjenigen des Auslaßkanals (17) angepaßt ist, und welcher im Schließzustand den Auslaßkanal (17) bis zum Auslaß (18) ausfüllt, und daß sowohl der Düsennadel (6) als auch der Nadelhülse (5) an ihren anderen Enden eine Zwangssteuerung (21) zugeordnet ist.

2. Mehrstoffdüse nach Anspruch 1, dadurch gekennzeichnet, daß mehrere konzentrische Nadelhülsen (104, 105, 106) vorgesehen sind.

3. Mehrstoffdüse nach Anspruch 1 oder 2, dadurch gekennzeichnet, daß der (den) Nadelhülse(n) (5 ; 104, 105, 106) und der Düsennadel (6 ; 103) unabhängig voneinander einstellbare Hubverstellanschläge (30, 31 ; 107, 108, 109, 110) zugeordnet sind.

4. Mehrstoffdüse nach einem der Ansprüche 1 bis 3, dadurch gekennzeichnet, daß die Zwangssteuerung (21) aus hydraulischen Antrieben (22, 23) besteht.

5. Mehrstoffdüse nach einem der Ansprüche 1 bis 4, gekennzeichnet durch die Zuordnung von Komponentenrücklaufleitungen (32, 33) und Absperrorganen (34, 35), wobei die Absperrorgane (34, 35) aus hydraulischen Antrieben (36, 37) bestehen und mit den hydraulischen Antrieben (22, 23) von Düsennadel (6) und Nadelhülse(n) (5) gekoppelt sind.

6. Mehrstoffdüse nach einem der Ansprüche 1 bis 5, dadurch gekennzeichnet, daß eine Zuleitung (44) für eine Zusatzkomponente vorgesehen ist, deren Mündung (45) in die Führungsbohrung (47) der Düsennadel (6) weist, und die Düsennadel (6) mit einem Absatz (48) versehen ist, welcher als Steuerkante dient, indem in Öffnungsstellung der Düsennadel (6) die Mündung (45) von dem Absatz (48) freigegeben ist und in Schließstellung von dem dickeren Schaftabschnitt (49) abgedichtet ist.

7. Mehrstoffdüse nach einem der Ansprüche 1 bis 6, dadurch gekennzeichnet, daß die Mündung (66) einer Zuleitung (67) für eine weitere Zusatzkomponente im Bereich des Dichtsitzes (12) der Nadelhülse (5) mit der Gehäusebohrung (4) angeordnet ist.

8. Mehrstoffdüse nach einem der Ansprüche 1 bis 7, gekennzeichnet durch die Kombination mit einem Formwerkzeug (51) mittels Anfahrführungen (57, 58) und korrespondierender Koppelelemente (55, 56, 59, 60).

9. Mehrstoffdüse nach Anspruch 8, dadurch gekennzeichnet, daß in der Wandung des Formwerkzeuges (51) eine dem Formhohlraum (54) vorgeordnete Beruhigungskammer (61) vorgesehen ist, deren Einlaßöffnung (65) in Koppelstellung der Mehrstoffdüse mit deren Auslaßöffnung (18) übereinstimmt und mittels eines in der Wandung des Formwerkzeuges (51) integrierten Verschlußschiebers (62) verschließbar ist.

10. Verfahren zum Zusammenführen mindestens zweier fließfähiger, Kunststoff, insbesondere Schaumstoff bildender Reaktionskomponenten zum Zwecke des Einleitens der Reaktion durch Vermischung, wobei die Reaktionskomponenten dosiert zugeführt und eine der Reaktionskomponenten zentral und die andere(n) die erste konzentrisch umhüllend zusammengeführt werden, und beim Zusammenführen eine Relativgeschwindigkeit zwischen dem zentralen und dem (den) konzentrischen Strahl(en) eingehalten wird, dadurch gekennzeichnet, daß eine so hohe Relativgeschwindigkeit erzeugt wird, daß in der Grenzschicht zwischen den Strahlen Turbulenz entsteht.

11. Verfahren nach Anspruch 10, dadurch gekennzeichnet, daß bei mehr als zwei Strahlen die weiteren Strahlen zu einem beliebigen Zeitpunkt zugeführt bzw. unterbrochen werden.

**Claims**

1. Multiple feedstock nozzle for bringing together at least two flowable, reactive components forming a plastic, particularly a foam material for the purpose of initiating the reaction by mixing, comprising a housing (1) ; inward flow channels for feedstock (2, 3) running into the housing (1) ; a bored-out section (4) of the housing with a coaxial discharge duct (17) in its face (14) arranged within the housing (1) ; at least one coaxially sliding pin bush (5) within the bored-out section of the housing (4) ; a coaxially sliding nozzle pin (6) within the pin bush (5) ; chambers (7, 9) arranged between the wall (8) of the bored-out section of the housing (4) and the pin bush (5) as well as between the pin bush (5) and the nozzle pin (6), in each of which one of the inward flow channels for feedstock (2, 3) enters, where in the shut condition sealed seatings (12, 15) are formed respectively by the nozzle pin (6) with the inner face (11) of the pin bush (5), and the outer face (13) of the pin bush (5) with the inner face (14) of the bored-out section of the housing (4), while on the other hand in the open condition the nozzle pin (6) opens up a coaxial nozzle aperture (19) of the pin bush (5), and a nozzle aperture (20) is formed between the outer face (13) of the pin bush (5) and the inner face (14) of the bored-out section of the housing (4), characterized in that the nozzle pin (6) is fitted with a coaxial plug (16), the cross-sectional shape and size of which is matched to those of the nozzle aperture (19) of the pin bush (5) and to those of the discharge duct (17), and which in the closed condition occupies the discharge duct (17) as far as the discharge port (18), and in that both the nozzle pin (6) and the pin bush (5) are equipped at their other ends with a forced operative system (21).

2. Multiple feedstock nozzle according to Claim 1, characterized in that several concentric pin bushes (104, 105, 106) are provided.

3. Multiple feedstock nozzle according to Claim 1 or 2, characterized in that the pin bush or pin bushes (5 ; 104, 105, 106) and the nozzle pin (6 ; 103) are equipped with separate independently adjustable stroke controls (30, 31 ; 107, 108, 109, 110).

4. Multiple feedstock nozzle according to one of Claims 1 to 3, characterized in that the forced operative system (21) comprises hydraulic drives (22, 23).

5. Multiple feedstock nozzle according to one of Claims 1 to 4, characterized by the provision of feedstock return channels (32, 33) and blocking devices (34, 35), where the blocking devices (34, 35) comprise hydraulic drives (36, 37) and are coupled with the hydraulic drives (22, 23) of the nozzle pin (6) and the pin bush or pin bushes (5).

6. Multiple feedstock nozzle according to one of Claims 1 to 5, characterized in that an entry channel (44) is provided for an additive component, the delivery aperture (45) of the channel leading into the bored-out guide hole (47) of the nozzle pin (6) and the nozzele pin has a shoulder (48) which acts as a control surface, in that in the open position of the nozzle pin (6) the delivery aperture (45) is left open by the shoulder (48) and in the closed position is sealed off by the thicker section of the shaft (49).

7. Multiple feedstock nozzle according to one of Claims 1 to 6, characterized in that the delivery aperture (66) of a feed channel (67) for a further additive component is provided in the region of the sealed seating (12) of the pin bush (5) with the bored-out section (4) of the housing.

8. Multiple feedstock nozzle according to one of Claims 1 to 7, characterized in that they are combined with a moulding tool (51) by means of locating guides (57, 58) and corresponding coupling elements (55, 56, 59, 60).

9. Multiple feedstock nozzle according to Claim 8, characterized in that a reservoir (61) is arranged upstream of the mould cavity (54) in the wall of the moulding tool (51), the inlet port (65) of the reservoir being lined up with the discharge port (18) of the multiple feedstock nozzle when in the coupled position and being able to be closed by means of an interlocking bar (62) in the wall of the moulding tool (51).

10. Process for bringing together at least two flowable, reactive components forming a plastic, particularly a foam material, for the pupose of initiating the reaction by mixing, in which the reactive components are metered in, and one of the reactive components is brought centrally and the other or others are brought together with the first, enveloping it concentrically, and while the reactive components are being brought together a relative speed is maintained between the central jet and the concentric jet or jets, characterized in that such a high relative speed is generated that turbulence is caused in the interfacial layer between the jets.

11. Process according to Claim 10, characterized in that in the case of more than two jets, the additional jets are introduced or interrupted at a desired moment in time.

## Revendications

1. Buse mixte pour la délivrance conjointe d'au moins deux composants réactionnels fluides formant une matière plastique, en particulier une mousse, en vue de déclencher la réaction par mélangeage, comprenant un corps (1) ; des conduits (2, 3) d'admission des composants, débouchant dans le corps (1) ; un perçage (4) pratiqué dans le corps (1) et présentant un canal coaxial de sortie (17) dans sa face extrême (14) ; au moins une douille (5) à pointeau, guidée coaxialement dans le perçage (4) du corps, un pointeau d'injection (6) guidé coaxialement dans la douille (5) à pointeau ; des chambres (7, 9) respectivement disposées entre la paroi (8) du perçage (4) du corps et la douille (5) à pointeau, ainsi qu'entre cette douille (5) à pointeau et le pointeau d'injection (6), et dans lesquelles débouche l'un considéré des conduits (2, 3) d'admission des composants, buse dans laquelle, en condition fermée, des sièges d'étanchéité respectifs (12, 15) sont formés par le pointeau d'injection (6) avec la face frontale interne (11) de la douille (5) à pointeau, et par la face frontale externe (13) de la douille (5) à pointeau avec la face extrême interne (14) du perçage (4) du corps, tandis qu'en revanche, en condition ouverte, le pointeau d'injection (6) dégage un orifice coaxial d'injection (19) de la douille (5) à pointeau, et un orifice d'injection (20) est formé entre la face frontale externe (13) de la douille (5) à pointeau et la face extrême interne (14) du perçage (4) du corps, caractérisée par le fait que le pointeau d'injection (6) est pourvu d'un téton coaxial (16) dont la forme et la taille de la section sont adaptées à celles de l'orifice d'injection (19) de la douille (5) à pointeau et à celles du canal de sortie (17), et qui, en condition fermée, comble le canal de sortie (17) jusqu'à l'ajutage de sortie (18) ; et par le fait qu'une commande forcée (21) est associée tant au pointeau d'injection (6) qu'à la douille (5) à pointeau, à leurs autres extrémités.

2. Buse mixte selon la revendication 1, caractérisée par le fait que plusieurs douilles concentriques (104, 105, 106) à pointeaux sont prévues.

3. Buse mixte selon la revendication 1 ou 2, caractérisée par le fait que des butées (30, 31 ; 107, 108, 109, 110) de réglage de course, ajustables indépendamment les unes des autres, sont associées à la (aux) douille(s) (5 ; 104, 105, 106) à pointeau(x) et au pointeau d'injection (6 ; 103).

4. Buse mixte selon l'une des revendications 1 à 3, caractérisée par le fait que la commande forcée (21) se compose d'entraînements hydrauliques (22, 23).

5. Buse mixte selon l'une des revendications 1 à 4, caractérisée par l'association mutuelle de conduits (32, 33) de retour des composants et d'organes d'isolement (34, 35), ces organes d'isolement (34, 35) étant constitués par des entraînements hydrauliques (36, 37) et étant accouplés aux entraînements hydrauliques (22, 23) du pointeau d'injection (6) et de la (des) douille (s) (5) à pointeau(x).

6. Buse mixte selon l'une des revendications 1 à 5, caractérisée par le fait qu'il est prévu un conduit (44) d'admission d'un composant additionnel dont l'embouchure (45) mène dans le perçage (47) de guidage du pointeau d'injection (6), et le pointeau d'injection (6) est muni d'un décrochement (48) qui sert d'arête de commande, du fait que l'embouchure (45) est dégagée par le décrochement (48) dans la position ouverte du pointeau d'injection (6) et est isolée de manière étanche, dans la position fermée, par la région épaissie (49) du fût.

7. Buse mixte selon l'une des revendications 1 à 6, caractérisée par le fait que l'embouchure (66) d'un conduit (67) d'admission d'un composant additionnel supplémentaire est disposée au voisinage du siège d'étanchéité (12) de la douille (5) à pointeau avec le perçage (4) du corps.

8. Buse mixte selon l'une des revendications 1 à 7, caractérisée par la combinaison avec un outil de moulage (51), au moyen de guides de présentation (57, 58) et d'éléments d'accouplissement correspondants (55, 56, 59, 60).

9. Buse mixte selon la revendication 8, caractérisée par le fait qu'il est prévu, dans la paroi de l'outil de moulage (51), une chambre de stabilisation (61) qui est disposée en amont de la cavité de moulage (54) et dont l'orifice d'admission (65), dans la position accouplée de la buse mixte, coïncide avec l'ajutage de sortie (18) de cette dernière et peut être obturé au moyen d'une coulisse d'obturation (62) intégrée dans la paroi de l'outil de moulage (51).

10. Procédé pour délivrer conjointement au moins deux composants réactionnels fluides formant une matière plastique, en particulier une mousse, en vue de déclencher la réaction par mélangeage, les composants réactionnels étant délivrés de manière dosée, et l'un des composants réactionnels étant délivré centralement, l'autre (les autres) étant délivré(s) en enveloppant concentriquement le premier, et une vitesse relative étant entretenue, lors de la délivrance conjointe, entre le jet central et le (les) jet(s) concentrique(s), caractérisé par le fait qu'il est engendré une vitesse relative d'une grandeur propre à provoquer une turbulence entre les jets dans la couche limite.

11. Procédé selon la revendication 10, caractérisé par le fait que, en présence de plus de deux jets, les autres jets sont respectivement délivrés ou interrompus à un instant choisi à volonté.

EP 0 137 250 B1

FIG. 1

EP 0 137 350 B1

FIG. 2

FIG. 3

FIG. 4